# EUROPÄISCHE PATENTSCHRIFT

(11) **EP 2 253 737 B1**
(45) Veröffentlichungstag und Bekanntmachung des Hinweises auf die Patenterteilung: **21.08.2019**
(21) Anmeldenummer: 10005210.9
(22) Anmeldetag: 19.05.2010
(51) Int. Cl.: C23C 28/00, G02B 5/08, G02B 1/11, H01L 31/0216, F24S 70/20, F24S 70/30, F24S 20/20, F24S 23/74

(54) **Strahlungsselektive Absorberschichtung und Absorberrohr mit strahlungsselektiver Absorberbeschichtung**
Radiation-selective absorber coating and absorber tube with radiation-selective absorber coating
Revêtement d'absorption à rayonnement sélectif et tuyau d'absorbeur avec un revêtement d'absorption à rayonnement sélectif

(30) Priorität: 20.05.2009 DE 102009022059
(43) Veröffentlichungstag der Anmeldung: 24.11.2010
(73) Patentinhaber: SCHOTT Solar AG, 55122 Mainz (DE)
(72) Erfinder: Kuckelkorn, Thomas, Dr., 07743 Jena (DE); Silmy, Kamel, Dr., 95666 Mitterteich (DE); Dreyer, Sebastian, Dr., 95643 Tirschenreuth (DE)

(56) Entgegenhaltungen:
- DE-B3-102004 010 689
- DE-B3-102006 056 536
- US-A1- 2007 281 171
- LANXNER M ET AL: "Solar selective absorber coating for high service temperatures, produced by plasma sputtering" PROCEEDINGS OF THE SPIE - OPTICAL MATERIALS TECHNOLOGY FOR ENERGY EFFICIENCY AND SOLAR ENERGY CONVERSION IX, 12. - 13. MÄRZ 1990, DEN HAAG [NL], Bd. 1272, 12. März 1990 (1990-03-12), Seiten 240-249, XP002595344 THE INTERNATIONAL SOCIETY FOR OPTICAL ENGINEERING [US] ISSN: 0277-786X

## Beschreibung

Die Erfindung betrifft eine strahlungsselektive Absorberbeschichtung gemäß dem Oberbegriff des Patentanspruchs 1. Die Erfindung bezieht sich auch auf ein Absorberrohr mit einer solchen strahlungsselektiven Beschichtung und auf ein Verfahren zum Betreiben eines Parabolrinnenkollektors unter Verwendung solcher Absorberrohre. Parabolrinnenkollektoren werden zur Stromerzeugung in Solarkraftwerken eingesetzt.

Übliche Absorberbeschichtungen bestehen aus einem auf einem Substrat, insbesondere einem Metallrohr, aufgebrachten, im Infrarot-Bereich reflektierenden Schicht sowie einer Cermet-Schicht, die über einen hohen Absorptionsgrad im Bereich des Solarspektrums verfügt, und einer auf der Cermet-Schicht aufgebrachten Deckschicht, die als Antireflexionsschicht bezeichnet wird und wegen des hohen Brechungsindex der Cermet-Schicht zur Verringerung der Oberflächenreflexion auf der Cermet-Schicht vorgesehen ist.

Grundsätzliches Bestreben ist es, eine möglichst hohe Energieausbeute zu erzielen. Die Energieausbeute hängt unter anderem von den Koeffizienten des Absorptionsgrads α und des Emissionsgrads ε ab, wobei immer ein hoher Absorptionsgrad (α ≥ 95%) und ein geringer Emissionsgrad (ε ≤ 10%) der Absorberbeschichtung angestrebt werden.

Ferner wird der Wirkungsgrad eines Solarkraftwerkes durch die Betriebstemperatur des Kollektorfeldes bestimmt. Unter diesem Gesichtspunkt ist eine möglichst hohe Temperatur erwünscht. Konträr hierzu nimmt die Haltbarkeit des Schichtsystems der Absorberbeschichtung aber mit steigender Betriebstemperatur aufgrund von Alterungs- und/oder Diffusionsprozessen ab, wodurch beispielsweise die Absorptionseigenschaft der Cermet-Schicht und die Reflexionseigenschaft der im Infrarot-Bereich reflektierenden Schicht stark nachlassen können.

Für die im Infrarot-Bereich reflektierenden Schichten wird üblicherweise Molybdän verwendet. Allerdings sind die Reflexionseigenschaften einer Molybdän-Schicht nicht optimal, so dass es wünschenswert ist, besser reflektierende Materialien einzusetzen. Daher werden für im IR-Bereich reflektierende Schichten auch andere Materialien mit bessere IR-Reflexionseigenschaften beispielsweise Kupfer oder Silber wie verwendet.
Die Betriebstemperatur bekannter Absorberrohre liegt bei 300-400°C. Es wird aus den vorstehenden Gründen grundsätzlich angestrebt, die Betriebstemperatur weiter zu steigern, ohne aber beispielsweise die Absorptionseigenschaften der Cermet-Schicht und die Reflexionseigenschaften der im Infrarot-Bereich reflektierenden Schicht zu beeinträchtigen.

In C.E. Kennedy, "Review of Mid- to High-Temperature Solar Selective Absorber Materials", Technical Report des National Renewable Energy Laboratory, Ausgabe Juli 2002, sind solche Bestrebungen zusammengefasst. Daraus ist ein Schichtaufbau aus einer ZrOₓN_{y}- oder einer ZrCₓN_{y}-Absorptionsschicht und einer im IR-Bereich reflektierenden Schicht aus Ag oder AI bekannt, der durch Einbringung einer Al₂O₃-Diffusionssperrschicht eine verbesserte Temperaturstabilität an Luft aufweist. Ferner wurde festgestellt, dass die Temperaturstabilität der Infrarot-Reflexionsschicht im Vakuum durch Einbringung einer Diffusionssperrschicht unterhalb dieser Schicht verbessert werden kann. Für diese Barriereschicht werden Cr₂O₃, Al₂O₃ oder SiO₂ als Schichtmaterial vorgeschlagen. Hierdurch wird eine Stabilität der Silber-Reflexionsschicht bis 500°C erhofft.

Das Streben nach haltbareren Schichten bei weiterhin gutem Absorptions- und Emissionsgrad ist damit aber nicht beendet.

Daher beschreibt DE 10 2006 056 536 B3 eine strahlungsselektive Absorberbeschichtung mit wenigstens zwei Barriereschichten, einer darauf angeordneten im IR-Bereich reflektierenden Schicht, einer über der reflektierenden Schicht angeordneten Absorptionsschicht und mit einer über der Absorptionsschicht angeordneten Antireflexionsschicht, die einen hohen solaren Absorptionsgrad und einen niedrigen thermischen Emissionsgrad aufweisen.

Die Haftung der IR-reflektierenden Schicht, die vorzugsweise aus Silber besteht, ist zwar ausreichend, aber noch verbesserungswürdig. Insbesondere hat sich gezeigt, das die Substratvorbehandlung im Produktionsprozess einen starken Einfluss auf die Schichthaftung hat. So kann die Schichthaftung beispielsweise durch längere Lagerzeiten oder äußere Einflüsse wie Feuchtigkeit oder Partikeleintrag vor dem Beschichten negativ beeinflusst werden.

DE 20 2006 009 369 U1 beschreibt ein Verbundmaterial für ein Solarkollektorelement, das in seinem Schichtsystem eine Trennschicht enthält, die mindestens eine aus Kunststoff bestehende Teilschicht umfasst.

Aufgabe der Erfindung ist es in diesem Sinne, eine Absorberbeschichtung, deren einzelne Schichten sehr gut haftend sind, so dass die Absorberbeschichtung in sich stabil und unempfindlich gegen produktionsbedingt schwankende äußere Einflüsse ist, bereitzustellen. Aufgabe der Erfindung ist es weiterhin, ein Absorberrohr mit einer derartigen Beschichtung und ein Verfahren zum Betreiben von Parabolrinnenkollektoren, in denen solche Absorberrohre eingesetzt werden, bereitzustellen.

Diesen Aufgaben werden durch die unabhängigen Patentansprüche 1 und 5 gelöst, nämlich dadurch, dass zwischen einer Barriereschicht, bestehend aus einer SiOₓ-Verbindung, wobei x die Werte 1 bis 2 annehmen kann, und einer im IR-Bereich reflektierenden Schicht aus Silber wenigstens eine haftungsverbessernde Schicht angeordnet ist, die aus Molybdän besteht.

Die erfindungsgemäße strahlungsselektive Absorberbeschichtung für Absorberrohre von Parabolrinnenkollektoren weist die Merkmale auf, wie sie in Anspruch 1 definiert sind. Ein entsprechendes Verfahren ist in Anspruch 5 definiert.

Die haftungsverbessernde Schicht hat bevorzugt eine Dicke von 5 nm bis 50 nm. Bei geringerer Dicke ist aufgrund der durch den Sputterprozess bedingten Schichtdickeschwankung eine flächendeckende.Wirkung nicht mehr gewährleistet. Mit anderen Beschichtungsverfahren, die eine bessere Beschichtungshomogenität ermöglichen, sollten ggf. auch geringere Schichtdicken als 5 nm abscheidbar sein, die eine ausreichende Haftvermittlung bewirken. Bei größerer Dicke als 50 nm ist keine Verbesserung der Haftvermittlung nachweisbar, gleichzeitig können durch höhere Dicken Eigenspannungen der Haftvermittlerschicht.aufgebaut werden, die sich negativ auf das Gesamtschichtsystem auswirken. Besonders bevorzugt ist eine Dicke von 10 nm bis 20 nm. Die haftungsverbessernde Schicht besteht aus Molybdän. Silicium ist als Material für die haftungsverbessernde Schicht gut geeignet und weist ein ausreichendes Haftungsvermögen auf. Dieses ist aber nicht so hervorragend wie das von Molybdän.

Kupfer ist als Material für die haftungsverbessernde Schicht gut geeignet, wird aber vor allem bevorzugt bei Absorberrohren mit niedrigen Betriebstemperaturen eingesetzt, da die Temperaturstabilität von Kupfer ab 300° C nachlässt. Sowohl Titan als auch Titanoxid sind als Material für die haftungsverbessernde Schicht gut geeignet.

Molybdän als Material für die haftungsverbessernde Schicht in Kombination mit Silber als IR-reflektierender Schicht erfüllt die Aufgabe der Erfindung, da eine Absorberbeschichtung mit Silber als IR-reflektierender Schicht aufgrund der hohen Temperaturstabilität des Silbers bevorzugt für Absorberrohre mit hohen Betriebstemperaturen eingesetzt wird.

Das Molybdän hat in dieser Position im Schichtenstapel unter der IR-reflektierenden Schicht keine optische Funktion. Diese haftungsverbessernde Schicht ist optisch nicht wirksam.

Es sind unter der IR-reflektierenden Schicht, also auch unter der haftungsverbessernden Schicht, zwei Barriereschichten angeordnet.

Es hat sich nämlich gezeigt, dass die Abschirmung der im IR-Bereich reflektierenden Schicht sowie der haftungsverbessernden Schicht gegenüber dem Substrat durch eine zweischichtige Barriere ein insbesondere thermisch bedingtes Eindiffundieren des Substratmaterials, insbesondere von Eisen aus dem Stahl-Absorberrohr, in die im IR-Bereich reflektierende Schicht wirksam verhindert und damit die Langzeittemperaturstabilität der Beschichtung erhöht.

Dies gelingt sehr gut, indem die erste Barriereschicht der zwei Barriereschichten aus einem thermisch erzeugten Oxid besteht. Als thermisch erzeugtes Oxid ist z.B. Chromeisenoxid gut geeignet. Zudem besteht die zweite Barriereschicht der zwei Barriereschichten aus einer SiOₓ-Verbindung, bei der x die Werte 1 bis 2 annehmen kann. Besonders bevorzugt ist x = 2, aber auch Werte zwischen 1 und 2 sind möglich.

Die eine oder zwei Barriereschichten sind frei von Kunststoff. Insbesondere umfassen sie weder Teilschichten aus Kunststoff noch Kunststoffanteile in der Schicht bzw. den Schichten.

Zwischen der im IR-Bereich reflektierenden Schicht und der vorteilhafterweise aus Cermet bestehenden Absorptionschicht kann eine dritte Barriereschicht angeordnet sein, welche vorzugsweise aus einer AlₓO_{y}-Verbindung besteht, wobei x die Werte 1 oder 2 und y die Werte 1, 2 oder 3 annehmen kann. Alternativ ist eine dritte Barriereschicht aus einer SiOₓ-Schicht möglich, wobei x die Werte 1 bis 2 annehmen kann und vorzugsweise den Wert 2 annimmt.

Die Einbettung der im Infrarot-Bereich reflektierenden Schicht und der haftungsverbessernden Schicht zwischen zwei Aluminium- und/oder Siliciumoxidschichten und die damit verbundene Ausbildung eine Art Sandwich hat den Vorteil, dass auch kein Material aus der im Infrarot-Bereich reflektierenden Schicht in die darüber liegende Absorptionsschicht eindiffundieren kann und auf diese Weise die Absorptionseigenschaften der Absorptionschicht beeinträchtigt. Die weitgehende Unterbindung von Diffusionen innerhalb des Schichtsystems, insbesondere in oder aus der im Infrarot-Bereich reflektierenden Schicht, sowie in die Absorptionsschicht kann somit sichergestellt werden.

Auf diese Weise kann eine hohe Absorption mit α ≥ 95 % und ein geringer Emmisionsgrad mit ε ≤10 % bei einer Betriebstemperatur von 590 °C im Vakuum über eine Dauer von >1000 Stunden nachgewiesen werden. Die hohe solare Absorption und geringe thermische Emission wirkt sich auf den Wirkungsgrad eines Kollektors mit einem mit dieser Beschichtung versehenen Absorberrohrs gleich in doppelter Hinsicht positiv aus: Das verbesserte Selektivitätsverhältnis α/ε 0,95/0,1 bedeutet eine höhere Ausbeute der Strahlungsenergie, und eine erhöhte Betriebstemperatur ermöglicht eine effizientere Umwandlung in elektrische Energie, wobei erst die lange Lebensdauer einer derartigen Beschichtung das wirtschaftliche Betreiben eines entsprechenden Parabolrinnenkollektors mit derart beschichteten Absorberrohren sicherstellt.

Die hohe Temperaturstabilität der Absorberbeschichtung erlaubt nunmehr Betriebstemperaturen für die Absorberrohre von > 450°C.

Es kann vorteilhafterweise ein Wärmeträgermedium mit einem Siedepunkt < 110°C, insbesondere Wasser, eingesetzt werden. Bei derart hohen Betriebstemperaturen entsteht Wasserdampf, der unmittelbar in Dampfturbinen eingeleitet werden kann. Zusätzliche Wärmetauscher für die Übertragung der Wärme vom bisher verwendeten Öl auf Wasser sind nicht mehr erforderlich, so dass unter diesem Gesichtspunkt Parabolrinnenkollektoren mit Absorberrohren mit erfindungsgemäßen Absorberbeschichtung weitaus wirtschaftlicher betrieben werden können, als dies bisher der Fall war.
Ein weiterer Vorteil besteht darin, dass die Absorberschichten bei Betriebsstörungen des Kraftwerks, die zu erhöhten Absorberrohrtemperaturen führen, nicht unmittelbar geschädigt werden und somit für den Betrieb besser geeignet sind, da sie eine höhere Ausfallsicherheit bieten.

Vorzugsweise liegt die Dicke der Barriereschichten, insbesondere der Silicium- bzw. Aluminiumoxidschichten, zwischen 5 nm und 100 nm, bevorzugt zwischen 5 nm und 70 nm, besonders bevorzugt maximal 50 nm, ganz besonders bevorzugt zwischen 15 nm und 40 nm. Bei Dicken < 5 nm ist, je nach Zusammensetzung der angrenzenden Schichten, die Barrierewirkung der Silicium- bzw. Aluminiumoxidschicht nicht zufriedenstellend. Bei Dicken größer 100 nm treten thermische Spannungen auf, die unter Umständen zu einer Schichtablösung führen könnten. Die Dicken der beiden Barriereschichten, insbesondere der Silicium- bzw. Aluminiumoxidschichten können unterschiedlich sein, wobei die Dicke der unteren Siliciumoxidschicht vorzugsweise größer ist als die Dicke der oberen Oxidschicht. Vorzugsweise liegt die Schichtdicke der Barriereschicht oder der Barriereschichten, die zwischen dem Substrat und der haftungsverbessernden Schicht angeordnet ist oder sind, bei 5 nm bis 100 nm, vorzugsweise bei 10 nm bis 70 nm, besonders bevorzugt bei 15 bis 70 nm, ganz besonders bevorzugt bei 30 nm ± 10nm und die Schichtdicke der Barriereschicht, die zwischen der im IR-Bereich reflektierenden Schicht und der Absorptionsschicht angeordnet ist, bei 0 nm bis 50 nm, je nach Zusammensetzung der Schichten vorzugsweise bei 30 nm bis 40 nm oder auch bei 5 nm bis 15 nm.

Die im Infrarot-Bereich reflektierende Schicht besteht aus Silber. Dieses Material reflektiert im Infrarot-Bereich sehr gut, so dass ein Emissionsgrad ε < 10% erreichbar ist.

Die Dicke der im Infrarot-Bereich reflektierenden Schicht liegt materialabhängig vorzugsweise bei 50 nm bis 250 nm. Innerhalb dieses Dickenbereiches ist eine Schichtdicke von 100 nm bis 150 nm bevorzugt. Es können auch Schichtdicken im Bereich von 60 nm bis 150 nm, vorzugsweise von 80 nm bis 150 nm bevorzugt sein. Ganz besonders bevorzugt sind 110 nm ± 10 nm. In anderen Fällen kommen auch Schichtdicken von 50 bis 100 nm, insbesondere von 50 bis 80 nm in Betracht.

Diese geringen Schichtdicken für die im Infrarot-Bereich reflektierende Schicht sind deshalb möglich, well Silber eine sehr hohe Reflektivität aufweist und in bevorzugter Ausführungsform durch die Packung von ihr und der haftungsverbessernden Schicht zwischen zwei Barriereschichten nicht in andere Schichten wegdiffundieren können bzw. nicht durch die Eindiffusion störender anderer Elemente in ihren positiven Eigenschaften beeinträchtigt wird.

Der höhere Preis des Edelmetalls Silber kann durch die deutlich geringere Schichtdicke gegenüber den bekannten Schichtdicken für die im Infrarot-Bereich reflektierende Schicht kompensiert, teilweise sogar überkompensiert werden.

Die Dicke der Absorptionsschicht liegt vorzugsweise bei 60 nm bis 180 nm, insbesondere bevorzugt bei 80 nm bis 150 nm. Die Absorptionsschicht ist vorzugsweise eine Cermet-Schicht aus Aluminiumoxid mit Molybdän oder aus Zirkonoxid mit Molybdän. Anstelle von einer homogenen Absorptionsschicht können auch mehrere Absorptionsschichten unterschiedlicher Zusammensetzung, insbesondere mit abnehmendem Metallanteil, oder eine graduell veränderliche Absorptionsschicht vorgesehen sein. Vorzugsweise ist die Cermet-Schicht eine Gradientenschicht, worunter eine Schicht verstanden wird, bei der der Metallanteil innerhalb der Schicht kontinuierlich, in der Praxis auch stufenweise zu- bzw. abnimmt.

Die Schichtdicke der auf der Absorptionsschicht befindlichen Antireflexionsschicht liegt vorzugsweise bei 60 nm bis 120 nm, bevorzugt bei 70 nm bis 110 nm. Diese Schicht besteht vorzugsweise aus Siliziumoxid oder Aluminiumoxid.

Das gemäß Anspruch 1 beschichtete Absorberrohr weist strahlungsselektive Absorberbeschichtungen in den als für die Absorberbeschichtung bevorzugt geschilderten Ausführungsformen auf. Das Absorberrohr weist eine Absorptionsbeschichtung mit einer haftungsverbessernden Schicht aus Molybdän, die 5 nm bis 30 nm dick sein kann, auf. Das Absorberrohr weist eine Absorptionsbeschichtung mit einer IR-reflektierenden Schicht aus Silber auf.

Ein erfindungsgemäßes Verfahren zum Betreiben eines Parabolrinnenkollektors mit Absorberrohren, durch die ein Wärmeträgermedium geleitet wird, ist in Anspruch 5 definiert.

Als Wärmeträgerflüssigkeit kann insbesondere Wasser eingesetzt werden.

Das Verfahren zum Betreiben eines Parabolrinnenkollektors sieht vor, dass die Betriebstemperatur der Absorberrohre auf 450°C bis 550°C, insbesondere auf 480°C bis 520°C eingestellt werden kann.

Das Verfahren zum Betreiben eines Parabolrinnenkollektors wird bemit Absorberrohren betrieben, die strahlungsselektive Absorberbeschichtungen in den als für die Absorberbeschichtung bevorzugt geschilderten Ausführungsformen aufweisen.

Beispielhafte Ausführungsformen der Erfindung werden nachfolgend anhand der Zeichnungen näher erläutert.

Es zeigen:
- Figur 1: einen Parabolrinnenkollektor
- Figur 2: einen Schnitt durch ein Absorberrohr gemäß einer Ausführungsform der Erfindung.

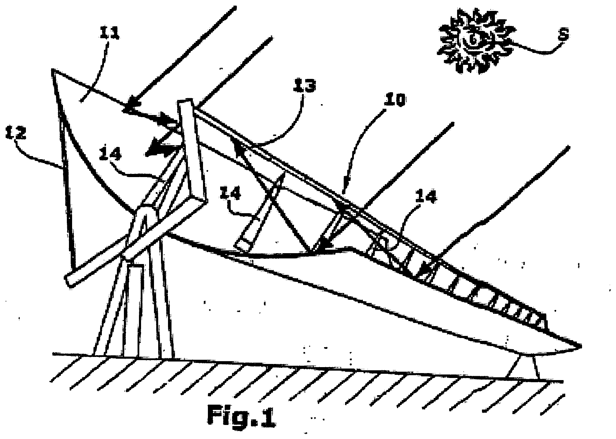

In der Figur 1 ist ein Parabolrinnenkollektor 10 dargestellt, der einen langgesstreckten Parabolreflektor 11 mit einem parabelförmigen Profil aufweist. Der Parabolreflektor 11 wird von einer Tragstruktur 12 gehalten. Längs der Brennlinie des Parabolreflektors 11 erstreckt sich ein Absorberrohr 13, das an Stützen 14 befestigt ist, welches mit dem Parabolrinnenkollektor verbunden sind. Der Parabolreflektor 11 bildet mit den Stützen 14 und dem Absorberrohr 13 eine Einheit, die um die Achse des Absorberohres 13 geschwenkt und dadurch dem Stand der Sonne S einachsig nachgeführt wird. Die von der Sonne S einfallende parallele Solarstrahlung wird von dem Parabolreflektor 11 auf das Absorberrohr 13 fokussiert. Das Absorberrohr 13 wird von einem Wärmeträgermedium, insbesondere Wasser durchflossen, und durch die absorbierte Solarstrahlung erhitzt. Am Austrittsende des Absorberohres kann das Wärmeübertragungsmedium entnommen und einem Energieverbraucher oder -umwandler zugeführt werden.

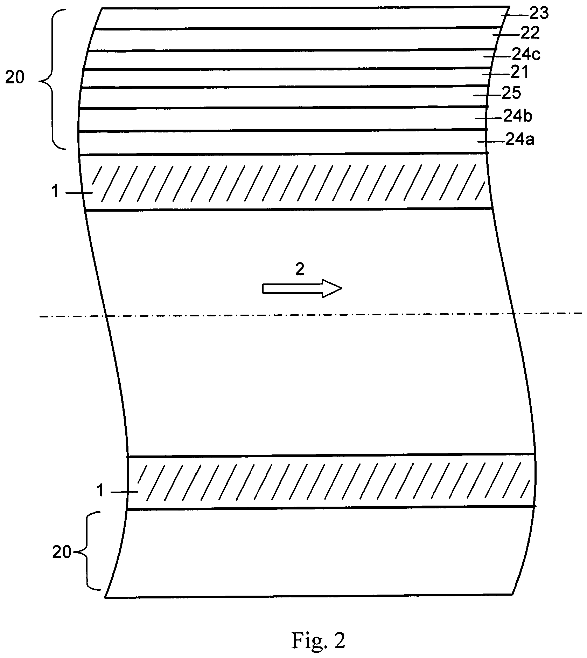

In der Figur 2 ist schematisch ein Schnitt durch ein Absorberrohr 13 dargestellt. Das Absorberrohr 13 weist ein von dem Wärmeträgermedium 2 durchströmtes Stahlrohr 1 auf, das das Substrat für die auf der Außenseite des Rohres 1 aufgebrachte Absorberbeschichtung 20 bildet. Die Schichtdicken der einzelnen Schichten der Absorberbeschichtung 20 sind zur einfachen Veranschaulichung vergrößert und ungefähr gleich dick eingezeichnet.

Die Absorberbeschichtung 20 weist von innen nach außen eine auf dem Stahlrohr 1 mittels thermischer Oxidation aufgebrachte erste Barriere- oder Diffusionssperrschicht 24a aus Chromeisenoxid auf. Darauf ist zwischen einer zweiten Barriereschicht 24b aus SiOₓ, vorzugsweise aus SiO₂, und einer dritten Barriereschicht 24c, vorzugsweise aus Silicium- oder Aluminiumoxid, eine haftungsverbessernde Schicht aus Molybdän 25 und auf ihr eine im Infrarot-Bereich reflektierende Schicht 21 aus Silber eingebettet. Auf der dritten Barriereschicht 24c ist eine Cermet-Schicht 22 aufgebracht, und nach außen schließt das Schichtsystem mit einer Antireflexionsschicht 23 vorzugsweise aus Siliciumoxid, ab.

Das Absorberrohr gemäß der Ausführungsform in Figur 2 wird mit dem im Folgenden beschriebenen Verfahren beschichtet.

Das Stahlrohr 1, vorzugsweise ein Edelstahlrohr, wird poliert und anschließend gereinigt. Vorzugsweise wird beim Polieren eine Oberflächenrauheit Rₐ < 0,2 µm erzielt. Anschließend wird das Edelstahlrohr bei einer Temperatur > 400°C etwa eine halbe bis 2 Stunden, insbesondere bei 500°C etwa 1 Stunde thermisch oxidiert. Dabei entsteht eine Oxidschicht von 15 nm bis 50 nm, vorzugsweise von 30 nm ± 10 nm Dicke als erste Barriereschicht 24a.

Anschließend wird das Stahlrohr in eine Vakuumbeschichtungsanlage eingeführt und die Anlage evakuiert. Nach Erreichen eines Druckes von weniger als 5 x 10⁻⁴ mbar, vorzugsweise 1 x 10⁻⁴ mbar werden die nachfolgenden Schichten mittels physikalischer Gasphasenabscheidung (PVD), insbesondere mittels Kathodenzerstäubung (Sputtern) aufgebracht. Dazu wird das Stahlrohr drehend an Sputterquellen, d.h. an aus den Beschichtungssubstanzen, beispielsweise AI, Si, Ag und Mo, bestehenden Targets vorbeigeführt.

Im ersten Abscheidungsschritt wird die zweite Barriereschicht 24b in Form einer SiOₓ-Schicht aufgebracht, indem Silicium verdampft bzw. zerstäubt und reaktiv unter Zuführung von Sauerstoff abgeschieden wird. Dabei wird ein Sauerstoffdruck zwischen 10⁻² mbar und 10⁻³ mbar, bevorzugt 4 x 10⁻³ mbar bis 7 x 10⁻³ mbar eingestellt. Die bevorzugte Schichtdicke dieser zweiten Barriereschicht beträgt 10 nm bis 70 nm und besonders bevorzugt 30 nm ± 10 nm.

Im folgenden zweiten Abscheidungsschritt wird auf der zweiten Barriereschicht 24b die haftungsverbessernde Schicht 25 aufgebracht, indem Molybdän in einer Schichtdicke von 5nm bis 50nm, bevorzugt von 10 nm bis 20 nm, abgeschieden wird.

Im folgenden dritten Abscheidungsschritt wird die im Infraroten reflektierende Schicht 21 aufgebracht, indem Silber mit einer Dicke von 60 nm bis 150 nm, besonders bevorzugt von 110 nm ±10 nm auf der zweiten Barriereschicht 24b abgeschieden wird.

Im vierten Abscheidungsschritt wird die dritte Barriereschicht 24c in Form einer weiteren SiOₓ- oder AlₓO_{y}-Schicht aufgebracht, indem Silicium oder Aluminium wie im Fall der zweiten Barriereschicht verdampft und reaktiv unter Zuführung von Sauerstoff abgeschieden wird. Die bevorzugte Schichtdicke dieser dritten Barriereschicht beträgt maximal 50 nm, besonders bevorzugt 10 nm ± 5 nm. Diese Barriereschicht kann aber auch völlig entfallen, da sich herausgestellt hat, dass bei geeigneter Zusammensetzung der auf der Reflexionsschicht 21 aufgebrachten Absorptionsschicht 22 eine Diffusion nicht durch eine zusätzliche Barriere gehemmt werden muss.

Im fünften Abscheidungsschritt wird durch gleichzeitige Verdampfung/Zerstäubung von Aluminium und Molybdän aus einem gemeinsamen Tiegel oder von zwei separaten Targets die Absorptions- oder genauer in diesem Fall die Cermetschicht 22 aufgebracht. Dabei wird vorzugsweise gleichzeitig Sauerstoff in den Verdampfungs-/Zerstäubungsbereich eingeleitet, um neben Aluminium und Molybdän (reaktiv) auch Aluminiumoxid abzuscheiden.

Dabei kann im fünften Abscheidungsschritt die Zusammensetzung durch entsprechende Wahl der Betriebsparameter (Verdampfungs-/Zerstäubungsrate und Sauerstoffmenge) unterschiedlich eingestellt und sogar im Verlauf der Schicht variiert werden. Insbesondere bei Verwendung separater Targets kann so die Abscheidung des Molybdänanteils relativ zur Abscheidung des Aluminium- und/oder Aluminiumoxidanteils in der Absorptionsschicht 22 variabel ausgeführt wird. Der Molybdänanteil der Absorptionsschicht 22 ist mit anderen Worten als Gradient ausgeführt, wobei er bevorzugt während des Aufbringens der Absorptionsschicht 22 gesenkt wird. Er beträgt innen vorzugsweise 25 Vol.-% bis 70 Vol.-%, besonders bevorzugt 40 ± 15 Vol.-%, und nimmt nach außen auf 10 Vol.-% bis 30 Vol.-%, besonders bevorzugt 20 ± 10 Vol.-%, ab.

Die Zugabe von Sauerstoff in Relation zum abgeschiedenen Aluminiumanteil erfolgt vorzugsweise unterstöchiometrisch, so dass ein nicht oxidierter Aluminiumanteil in der Absorptionsschicht 22 verbleibt. Dieser steht dann als Redoxpotential oder Sauerstoffgetter zur Verfügung, sodass die Bildung von Molybdänoxid unterbleibt. Der nicht oxidierte Aluminiumanteil in der Absorptionsschicht 22 liegt bevorzugt unter 10 Vol.-%, besonders bevorzugt zwischen 0 und 5 Vol.-%, bezogen auf die Gesamtzusammensetzung der Absorptionsschicht. Der nicht oxidierte Aluminiumanteil kann ebenfalls innerhalb der Absorptionsschicht durch Veränderung der Betriebsparameter Verdampfungsrate und Sauerstoffmenge variiert werden.

Die Absorptionsschicht 22 wird insgesamt vorzugsweise mit einer Dicke von 60 nm bis 180 nm, besonders bevorzugt mit einer Dicke von 80 nm bis 150 nm, ganz besonders bevorzugt mit 120 ± 30 nm aufgebracht.

Im sechsten Abscheidungsschritt wird die Antireflexionsschicht 23 in Form einer SiO₂-Schicht aufgebracht, indem mittels physikalischer Gasphasenabscheidung von Silizium unter Zuführung von Sauerstoff abgeschieden wird. Die bevorzugte Dicke der so abgeschiedenen Antireflexionsschicht 23 beträgt 70 nm bis 110 nm, besonders bevorzugt 90 ± 10 nm.

Ein auf diese Weise erzeugtes Absorberrohr wurde in einer Vakuumheizvorrichtung für 1400 h bei 590 °C geheizt. Der Druck im Vakuumraum war während dieser Heizdauer kleiner als 1 x 10⁻⁴ mbar. Nach Abschalten der Heizung und Abkühlen der Probe auf unter 100°C wurde der Vakuumraum belüftet und die Probe entnommen. Die Probe wurde anschließend spektrometrisch vermessen, wobei ein integraler solarer Absorptionsgrad α von 95 % ± 0,5 % für ein Sonnenspektrum AM 1,5 direkt und den Wellenlängenbereich von 350-2500 nm bestimmt werden konnte. Der thermische Emissionsgrad ε für eine Substrattemperatur von 400°C (BB400) wurde mit 10% ± 1 % ermittelt.
Die nachfolgende Tabelle zeigt den Verlauf von α und ε in Abhängigkeit von der Heizzeit.

| Zeit [h] | α [%] | ε (BB400) [%] |
|---|---|---|
| 0 | 95,7 | 10,9 |
| 24 | 95,2 | 9,7 |
| 56 | 95,1 | 10,1 |
| 126 | 95,0 | 9,9 |
| 190 | 95,0 | 9,8 |
| 250 | 95,1 | 10,1 |
| 300 | 95,0 | 9,7 |
| 460 | 95,2 | 10,5 |
| 610 | 94,9 | 10,0 |
| 1000 | 94,9 | 10,0 |
| 1150 | 94,9 | 10,1 |
| 1260 | 95,1 | 10,4 |
| 1400 | 94,9 | 9,8 |

In einer Vakuumbeschichtungsanlage wurde mit DC-Magnetronsputtern sowie MF-Magnetronsputtern das beschriebene Schichtsystem jeweils mit Haftvermittlungsschicht 25 und ohne Haftvermittlungsschicht 25 hergestellt. Nach dem Beschichten wurden Schichthaftungstests durchgeführt. Dabei wurde ein Klebeband mit starker Haftwirkung auf der Bechichtung aufgebracht und mit einem Kraftmessgerät abgezogen. Hierbei ergab sich bei der Beschichtung ohne Haftvermittlerschicht ein Abzugswert < 15 N. Gleichzeitig wurde eine teil- bis vollflächige Delamination der Beschichtung beobachtet. Bei Verwendung eines Klebebandes mit geringer Haftwirkung ergaben sich Abzugswerte bis 5 N und nur geringe bis keine Delamination. An den Proben, die mit Haftvermittlerschicht hergestellt wurden, ergaben sich beim Abzug des stark haftenden Klebebandes Abzugswerte bis zu 40 N ohne Delamination der Beschichtung. Die gleichen Ergebnisse ergaben sich für Proben die 100 h bei 550°C gealtert wurden.

Die erfindungsgemäße Absorptionsbeschichtung weist also neben den sonstigen geforderten Eigenschaften wie z. B. hoher solarer Absorptionsgrad und niedriger thermischer Emissionsgrad (α ≥ 95 %, ε ≤ 10%, bei Substrattemperatur 400 °C) auch eine hohe Stabilität in sich und eine gute Haftung der einzelnen Schichten untereinander auf. Insbesondere die Haftung der im IR-Bereich reflektierenden Schicht ist gegenüber dem Stand der Technik deutlich verbessert. Die haftungsverbessernde Wirkung der Haftvermittlungsschicht 25 zeigt sich sowohl im Kontakt mit der im Infrarot-Bereich reflektierenden Schicht 21, insbesondere wenn diese aus Silber besteht, als auch im Kontakt mit der Barriereschicht 24b, insbesondere wenn dieses aus Siliciumoxid besteht.

### Bezugszeichenliste

- 1: Stahlrohr
- 2: Wärmeträgerflüssigkeit
- 10: Parabolrinnenkollektor
- 11: Parabolreflektor
- 12: Tragstruktur
- 13: Absorberrohr
- 14: Stütze
- 20: strahlungsselektive Absorberbeschichtung
- 21: im Infrarot-Bereich reflektierende Schicht
- 22: Absorptionsschicht
- 23: Antireflexionsschicht
- 24a: erste Barriereschicht
- 24b: zweite Barriereschicht
- 24c: dritte Barriereschicht
- 25: haftungsverbessernde Schicht

## Patentansprüche

1. Strahlungsselektive Absorberbeschichtung (20) für Absorberrohre (13) von Parabolrinnenkollektoren (10), welche auf der Außenseite eines Rohres (1) aus Stahl aufgebracht wird,
a) mit einer im Infrarot-Bereich reflektierenden Schicht (21) aus Silber,
b) mit einer ersten Barriereschicht (24a) aus einem thermisch erzeugten Oxid, die auf dem Rohr (1) aus Stahl aufgebracht ist und durch thermische Oxidation des Rohres (1) aus Stahl erzeugt wird,
c) mit einer zweiten Barriereschicht (24b), die über der ersten Barriereschicht (24a) und unter der reflektierenden Schicht (21) angeordnet ist,
d) mit mindestens einer über der reflektierenden Schicht (21) angeordneten Absorptionsschicht (22), und
e) mit einer über der Absorptionsschicht (22) angeordneten Antireflexionsschicht (23),
**dadurch gekennzeichnet, dass**
f) die zweite Barriereschicht (24b) aus einer SiOₓ-Verbindung besteht, wobei x die Werte 1 bis 2 annehmen kann, und
g) zwischen der zweiten Barriereschicht (24b) und der reflektierenden Schicht (21) aus Silber wenigstens eine haftungsverbessernde Schicht (25) angeordnet ist, die aus Molybdän besteht.

2. Absorberbeschichtung (20) nach Anspruch 1,
**dadurch gekennzeichnet, dass** die Dicke der haftungsverbessernden Schicht (25) 5 nm bis 50 nm beträgt.

3. Absorberschichtung (20) nach Anspruch 1 oder Anspruch 2,
**dadurch gekennzeichnet, dass** die Dicke der im IR-Bereich reflektierenden Schicht (21) 50 nm bis 250 nm beträgt.

4. Absorberbeschichtung (20) nach Anspruch 3, **dadurch gekennzeichnet, dass** die Dicke der reflektierenden Schicht (21) 80 bis 150 nm beträgt.

5. Verfahren zum Betreiben eines Parabolrinnenkollektors mit Absorberrohren (13), durch die ein Wärmeträgermedium (2) geleitet wird, bei dem eine Wärmeträgerflüssigkeit mit einem Siedepunkt < 110 °C durch die Absorberrohre (13) geleitet wird und bei dem die Absorberrohre (13) mit einer strahlungsselektiven Absorberbeschichtung (20) verwendet werden, die auf der Außenseite eines Rohres (1) aus Stahl aufgebracht wird, und wobei die Absorberbeschichtung (20) aufweist:
- eine im Infrarot-Bereich reflektierende Schicht (21) aus Silber,
- eine erste Barriereschicht (24a) aus einem thermisch erzeugten Oxid, die auf dem Rohr (1) aus Stahl aufgebracht ist und durch thermische Oxidation des Rohres (1) aus Stahl erzeugt wird,
- eine zweite Barriereschicht (24b), die über der ersten Barriereschicht (24a) und unter der reflektierenden Schicht (21) angeordnet ist,
- mindestens eine über der reflektierenden Schicht (21) angeordnete Absorptionsschicht (22), und
- eine über der Absorptionsschicht (22) angeordnete Antireflexionsschicht (23),
**dadurch gekennzeichnet, dass**
- die zweite Barriereschicht (24b) aus einer SiOₓ-Verbindung besteht, wobei x die Werte 1 bis 2 annehmen kann, und
- zwischen der zweiten Barriereschicht (24b) und der reflektierenden Schicht (21) aus Silber wenigstens eine haftungsverbessernde Schicht (25) angeordnet ist, die aus Molybdän besteht.

## Claims

1. Radiation-selective absorber coating (20) for absorber tubes (13) of parabolic trough collectors (10), which is applied to the outside of a tube (1) composed of steel,
a) having a layer (21) which reflects in the infrared range and is composed of silver,
b) having a first barrier layer (24a) composed of a thermally produced oxide, which has been applied to the tube (1) composed of steel and is produced by thermal oxidation of the tube (1) composed of steel,
c) having a second barrier layer (24b) which is arranged above the first barrier layer (24a) and under the reflecting layer (21),
d) having at least one absorption layer (22) arranged above the reflective layer (21) and
e) having an antireflection layer (23) arranged above the absorption layer (22),
**characterized in that**
f) the second barrier layer (24b) consists of an SiOₓ compound, where x can assume values from 1 to 2, and
g) at least one adhesion-improving layer (25) which consists of molybdenum is arranged between the second barrier layer (24b) and the reflecting layer (21) composed of silver.

2. Absorber coating (20) according to Claim 1, **characterized in that** the thickness of the adhesion-improving layer (25) is from 5 nm to 50 nm.

3. Absorber coating (20) according to Claim 1 or Claim 2, **characterized in that** the thickness of the layer (21) which reflects in the IR range is from 50 nm to 250 nm.

4. Absorber coating (20) according to Claim 3, **characterized in that** the thickness of the reflecting layer (21) is from 80 to 150 nm.

5. Method for operating a parabolic trough collector having absorber tubes (13) through which a heat transfer medium (2) is passed, in which a heat transfer liquid having a boiling point of < 110°C is passed through the absorber tubes (13) and in which the absorber tubes (13) having a radiation-selective absorber coating (20) which is applied to the outside of a tube (1) composed of steel, where the absorber coating (20) comprises:
- a layer (21) which reflects in the infrared range and is composed of silver,
- a first barrier layer (24a) which is composed of a thermally produced oxide, which has been applied to the tube (1) composed of steel and is produced by thermal oxidation of the tube (1) composed of steel,
- a second barrier layer (24b) which is arranged above the first barrier layer (24a) and under the reflecting layer (21),
- at least one absorption layer (22) arranged above the reflecting layer (21) and
- an antireflection layer (23) arranged above the absorption layer (22),
are used, **characterized in that**
- the second barrier layer (24b) consists of an SiOₓ compound, where x can assume values from 1 to 2, and
- at least one adhesion-improving layer (25) which consists of molybdenum is arranged between the second barrier layer (24b) and the reflecting layer (21) composed of silver.

## Revendications

1. Revêtement absorbant (20) à sélectivité de rayonnement pour des tubes absorbants (13) de collecteurs à miroirs paraboliques (10), lequel est appliqué sur le côté extérieur d'un tube (1) en acier,
a) comprenant une couche (21) en argent réfléchissante dans la plage des infrarouges,
b) comprenant une première couche de barrière (24a) en un oxyde généré de manière thermique, laquelle est appliquée sur le tube (1) en acier et est générée par oxydation thermique du tube (1) en acier,
c) comprenant une deuxième couche de barrière (24b) qui est disposée au-dessus de la première couche de barrière (24a) et sous la couche réfléchissante (21),
d) comprenant au moins une couche d'absorption (22) disposée au-dessus de la couche réfléchissante (21) et
e) comprenant une couche antireflet (23) disposée au-dessus de la couche d'absorption (22),
**caractérisé en ce que**
f) la deuxième couche de barrière (24b) se compose d'une combinaison de SiOₓ, x pouvant prendre les valeurs 1 et 2, et
g) au moins une couche d'amélioration de l'adhérence (25), qui se compose de molybdène, est disposée entre la deuxième couche de barrière (24b) et la couche réfléchissante (21) en argent.

2. Revêtement absorbant (20) selon la revendication 1, **caractérisé en ce que** l'épaisseur de la couche d'amélioration de l'adhérence (25) est de 5 nm à 50 nm.

3. Revêtement absorbant (20) selon la revendication 1 ou la revendication 2, **caractérisé en ce que** l'épaisseur de la couche réfléchissante (21) dans la plage des infrarouges est de 50 nm à 250 nm.

4. Revêtement absorbant (20) selon la revendication 3, **caractérisé en ce que** l'épaisseur de la couche réfléchissante (21) est de 80 nm à 150 nm.

5. Procédé pour faire fonctionner un collecteur à miroirs paraboliques comprenant des tubes absorbeurs (13) à travers lesquels circule un fluide caloporteur (2), avec lequel un liquide caloporteur ayant un point d'ébullition < 110 °C circule à travers les tubes absorbeurs (13) et avec lequel les tubes absorbeurs (13) sont utilisés avec un revêtement absorbant (20) à sélectivité de rayonnement qui est appliqué sur le côté extérieur d'un tube (1) en acier, le revêtement absorbant (20) possédant :
- une couche (21) en argent réfléchissante dans la plage des infrarouges,
- une première couche de barrière (24a) en un oxyde généré de manière thermique, laquelle est appliquée sur le tube (1) en acier et est générée par oxydation thermique du tube (1) en acier,
- une deuxième couche de barrière (24b) qui est disposée au-dessus de la première couche de barrière (24a) et sous la couche réfléchissante (21),
- au moins une couche d'absorption (22) disposée au-dessus de la couche réfléchissante (21) et
- une couche antireflet (23) disposée au-dessus de la couche d'absorption (22),
**caractérisé en ce que**
- la deuxième couche de barrière (24b) se compose d'une combinaison de SiOₓ, x pouvant prendre les valeurs 1 et 2, et
- au moins une couche d'amélioration de l'adhérence (25), qui se compose de molybdène, est disposée entre la deuxième couche de barrière (24b) et la couche réfléchissante (21) en argent.
